# EUROPEAN PATENT APPLICATION

(11) **EP 3 101 534 A1**
(43) Date of publication of application: **07.12.2016**
(21) Application number: 15170068.9
(22) Date of filing: 01.06.2015
(51) Int. Cl.: G06F 9/44, G06F 9/45, G06N 5/02, G06F 17/30

(54) **METHOD AND COMPUTER PROGRAM PRODUCT FOR SEMANTICALLY REPRESENTING A SYSTEM OF DEVICES**

(71) Applicant: Siemens Aktiengesellschaft, 80333 München (DE)
(72) Inventor: Anicic, Darko, 81739 München (DE); Charpenay, Victor, 81677 München (DE); Käbisch, Sebastien, 81247 München (DE)

(57) **Abstract**

A method for semantically representing a system of devices is dedicated to automation purposes is disclosed. The method uses an ontology design pattern that allows model transformation from a tag representation to an ontological structure and back. Thereby, a tagging-based data model, particularly according to Haystack Project, for representing at least one of said devices by an entity is provided, wherein each entity is associated by at least one tag. The method comprises generating a semantic web representation and integrating said semantic web representation into an ontological model. This integration allows for an easy model instantiation corresponding to annotation with tags from a pre-defined vocabulary which has the advantage of modeling entities with low computational power and, in parallel, maintaining a representation by an ontological graph knowledge on the other hand. The ontological graph knowledge advantageously grants reasoning and search mechanisms by standard interfaces using query languages.

## Description

### TECHNICAL FIELD

The disclosed embodiments relate to a method and computer program product for semantically representing a system of devices. Specifically, the embodiments relate to a system of devices dedicated to automation purposes.

### BACKGROUND

Systems and networks of devices dedicated to automation purposes, such as used in the building automation domain, have to face challenges of getting more complex in terms of a rising number of interactions, heterogeneous embedded automation devices as well as an increasing number of diverse embedded services.

Identification and discovery-based topics are a primary concern in the field of representing a system of devices. For example, an automation function or a service may need to be identified and discovered based on its own functional or non-functional properties, including capability, availability time or location of such device.

Semantic web representations are seen as a good candidate to tackle these and similar challenges. Embedded devices, automation functions and services in automation systems may be semantically described in such a way that machines or other devices are able to understand and interpret semantic descriptions in order to autonomously allocate appropriate automation resources.

Notwithstanding their opportunities, a wide adoption of semantic web representations or even linked data technology is still lacking in the domain of embedded networks.

A currently adopted data model for representing a system of devices in the field of Building Automation is known as Project Haystack. This data model provides a standardized methodology for naming and describing data points associated with devices along with descriptive information known based on the broadly accepted concept of tags.

The Haystack data model supports simple and concise semantic tags, which can be stored locally and shared directly between field devices. However, this data model does not support contextual knowledge known from formal semantic web representations such as ontologies. Contextual knowledge, however, is regarded essential for a sophisticated data analytical interpretation of data, including a derivation of relationships between data and automatic processing based on declarative knowledge, i.e. reasoning over this knowledge. The Haystack data model is, therefore, not by itself suitable for tasks involving interpretation of multiple tags and their overall meaning on the level of a device or a complex automation system including the device.

### SUMMARY AND DESCIPTION

Although tagging-based data models have the benefit of being concise and the ability to share data among field devices, capabilities for sophisticated data analytics are lacking.

Accordingly, there is a need in the art for leveraging the benefits of a tagging-based data model by data analytical capabilities of a formal semantic web representation.

In one embodiment, a method for semantically representing a system of devices dedicated to automation purposes is disclosed. The method comprises the steps of:
- providing a tagging-based data model for representing at least one of said devices by an entity, each entity associated by at least one tag;
- generating a semantic web representation
- by establishing a tag-based semantic relation between at least one entity and at least one tag; and/or;
- by establishing a reference-based semantic relation between at least one entity and at least one other entity;
- integrating said semantic web representation into an ontological model
- by retrieving a class of the ontological model for at least one tag being related by said tag-based semantic relation and assigning or creating an individual in the ontological model;
- by retrieving an individual of the ontological model being related by said reference-based semantic relation and referencing or creating a referenced individual in the ontological model; and;
- by associating at least one individual of the ontological model with at least one other individual by a property of the ontological model based on a property associating the retrieved class of the least one individual and the retrieved class of the at least one other individual.

The proposed method uses an ontology design pattern that allows model transformation from a tag representation to an ontological structure and back. Thereby, a tagging-based data model, particularly according to Haystack Project, for representing at least one of said devices by an entity is provided, wherein each entity is associated by at least one tag. The method comprises generating a semantic web representation and integrating said semantic web representation into an ontological model.

This integration allows for an easy model instantiation corresponding to annotation with tags from a pre-defined vocabulary which has the advantage of modeling entities with low computational power and, in parallel, maintaining a representation by an ontological graph knowledge on the other hand. The ontological graph knowledge advantageously grants reasoning and search mechanisms by standard interfaces using query languages.

According to an alternative embodiment, a computer program product is disclosed, the computer program product comprising program code stored on a non-transitory computer-readable storage medium, the program code, when executed on a device dedicated to automation purposes, is configured to:
- load a tagging-based data model for representing at least one of said devices by an entity, each entity associated by at least one tag;
- generate a semantic web representation
   - by establishing a tag-based semantic relation between at least one entity and at least one tag and/or
   - by establishing a reference-based semantic relation between at least one entity and at least one other entity,
- integrate said semantic web representation into an ontological model
   - by retrieving a class of the ontological model for at least one tag being related by said tag-based semantic relation and assigning or creating an individual in the ontological model;
   - by retrieving an individual of the ontological model being related by said reference-based semantic relation and referencing or creating a referenced individual in the ontological model;
   - by associating at least one individual of the ontological model with at least one other individual by a property of the ontological model based on a property associating the retrieved class of the least one individual and the retrieved class of the at least one other individual.

Specific embodiments are set forth in the dependent claims.

The scope of the present invention is defined solely by the appended claims and is not affected to any degree by the statements within this summary.

### BRIEF DESCRIPTION OF THE DRAWING

- Fig. 1: shows a block diagram of graph knowledge generated from a tagged entity; and;
- Fig. 2: shows an architectural block diagram of a tagging ontology.

### DETAILED DESCRIPTION

According to an embodiment, a tagging-based data model for representing at least one device by an entity is provided, wherein each or at least one entity is associated by at least one tag. This is illustrated for the tagging-based data model Project Haystack. The embodiments, however, are not limited to a usage of this data model Project Haystack.

An exemplary modeling of an entity, here a data point - or more particularly: a sensor - by tags is described below:
id: @point01254
dis: "point01254"
sensor
temp
discharge
equipRef: @equip07454

An id tag is used to define a unique identifier of an entity in a system using a reference "equipRef" to an equipment. The tag or dis tag "point01254" is used with entities in order to define a display text used for describing the entity for a human user. The data point "point01254" belongs to equipment "equip07454" and is particularly embodied as a sensor "sensor" for an air exit "discharge" delivering a temperature measurement "temp".

In a following step, a semantic web representation of the tagged data point is generated. The semantic web representation or RDF representation (resource description framework) of the tag shown above is exemplarily generated using a Notation3 or N3 format:
<http://plant02.siemens.com/point01254>
   rdfs:label "point01254";
   hto:hasTag hto:sensor;
   hto:hasTag hto:temp;
   hto:hasTag hto:discharge;
   hto:hasRef <http://plant02.siemens.com/equip07454>.

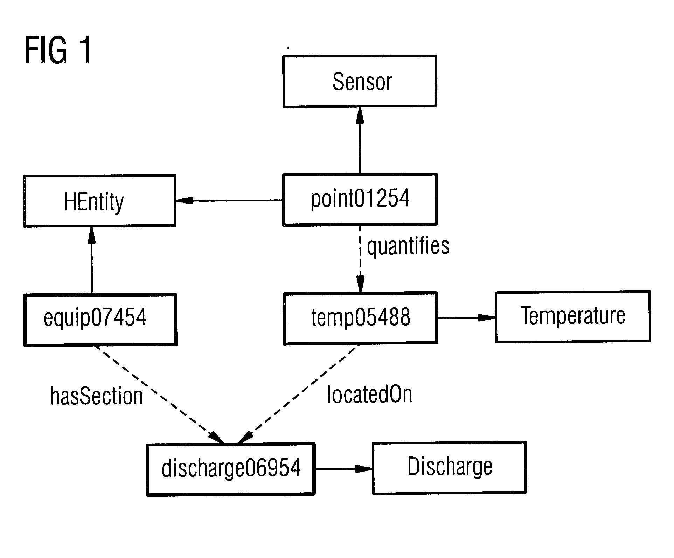

Thereby an individual - which is a "subject" in semantic web terminology - of the tag describing said data point was generated. According to an embodiment, individuals are uniquely identified as semantic web resources by a IRI (Internationalized Resource Identifier) or URI (Uniform Resource Identifier) composed of a namespace and a local name. In the example above, the namespace is exemplarily chosen to "http://plant02.siemens.com/" and the local name of the data point individual is "point01254". Anticipating the description of Fig. 1, the individuals depicted there are assigned by their local names.
In summary, the data point individual
"<http://plant02.siemens.com/point01254>" is generated from the tag "point01254".

One kind of semantic web representation of tags is generated by establishing a tag-based semantic relation between at least one entity and at least one tag. This tag-based relation is established by the "hasTag" declaration above.

Another kind of semantic web representation tags is generated by establishing a reference-based semantic relation (in other words: a reference) between at least one entity and at least one other entity. This reference-based relation is established by the "hasRef" declaration above. This reference reflects that the exemplary data point belongs to a piece of equipment tagged "equip07454".

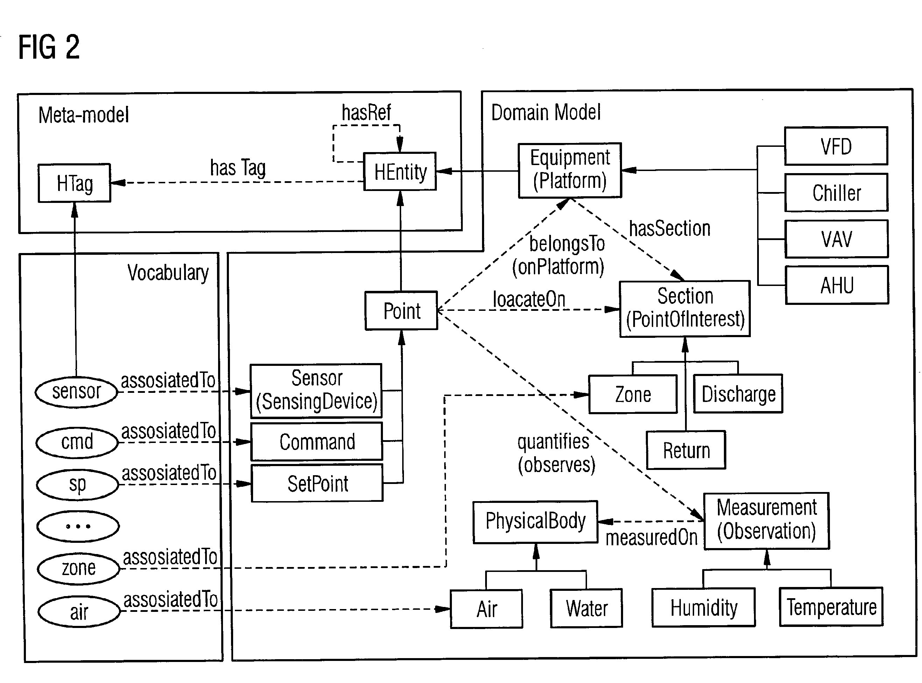

In a following step, the semantic web representation is integrated into an ontological model. An ontology is applied to integrate tags and underlying semantics into a formal graph representation. An architectural block diagram of a tagging ontology - hereinafter specifically referred to as Haystack Tagging Ontology (HTO) without limiting the generality of the foregoing - is depicted in Fig. 2.

The Haystack Tagging Ontology according Figure 2 shows three sections entitled vocabulary, domain model and meta-model. The underlying design pattern intends a separation of the vocabulary part, consisting of raw tags, from the ontological part or domain model which comprises types and relations. Vocabulary and ontological relations are made consistent with each other with respect to the common meta-model.

The tags are organized in the vocabulary and associated to individuals instantiated by a class of the domain model. The class is related by the tag-based semantic relation.

In said design pattern the domain model and the vocabulary are aware of the meta-model, i.e. their entities subsume or reference those of the meta-model. Moreover, the vocabulary annotates the domain model while the latter is not aware of the vocabulary. The meta-model facilitates a model transformation between the vocabulary and the domain model since they can refer to each other.

According to the meta-model depicted in Fig. 2, Haystack tags are of type "HTag". In OWL terminology, "HTag" is a class while tags are individuals. Haystack tags are used to tag entities, which motivates a definition of the class "HEntity" and the relation "hasTag" linking HEntity with HTag. A relation in OWL (Web Ontology Language) is called a property. "HEntity" has a further self-referencing relation "hasRef" in order to define references of individuals of the class "HEntity" to other individuals of the class "HEntity". This reference relation "hasRef" was used above in order to define the individual "data point" is belonging to the individual "equipment".

The Haystack Tagging Ontology according to the Domain Model in Fig. 2 defines ontological properties between high-level classes "Point", "Section", "Equipment", "Measurement" and "PhysicalBody" along with a taxonomy for each of these classes.

For the sake of clarity, in Fig. 2, the high-level class "Section" is detailed as "Section (PointOfInterest)", high-level class "Equipment" is detailed as "Equipment (Platform)" and the high-level class "Measurement" is detailed as "Measurement (Observation)". The expressions added in parenthesis below the high-level class names indicate equivalent entities used in an ontology entitled Semantic Sensor Network (SSN).

The central high-level classes are "Point" and "Equipment". A "Point" models a data point, i.e. an automation device for producing or consuming data. "Equipment" models any kind of equipment which is to be automated. Equipments are further organized in "Sections", modeling e.g. ductwork, condenser or heat wheel.

Turning now back to the step of integrating the semantic web representation into the ontological model, the ontology is applied to integrate tags and underlying semantics into a formal graph representation according to the embodiments described below. In order to integrate the semantic web representation into the ontological model, a model transformation is applied. The model transformation applied comprises the following sub-steps described below.

By a first sub-step, a class of the ontological model is retrieved for at least one tag being related by a tag-based semantic relation and assigning or creating an individual in the ontological model. For each tag being related by the tag-based semantic relation "hto:hasTag" - see semantic web representation defined above - the associated class is retrieved and an individual is created. For the case that the individual already exists, the existing individual is assigned. An individual is a term used in the domain model according to the terminology of OWL (Web Ontology Language) and corresponds with an entity.

The example below shows the results of the model transformation according to the first sub-step:
<http://plant02.siemens.com/point01254> a hto:Sensor;
<http://plant02.siemens.com/temp05488> a hto:Temperature;
<http://plant02.siemens.com/discharge06954> a hto:Discharge;

For the data point "point01254" - for which a semantic web representation was defined above - an individual defined by the IRI "http://plant02.siemens.com/point01254" was created belonging to the class "Sensor" - see box "Sensor (Sensing Device)" in Fig. 2 - belonging to the of high-level class "Point" - see box of same denominator in Fig. 2.

While data point "point01254" was already named by a tag name concatenated by an individual numeral "01254" in the semantic web representation, the air exit "discharge" and the temperature measurement "temp" remained without a numeral. Accordingly, instance names "temp05488" and "discharge06954" have been automatically generated for the respective individuals within this first sub-step, while said individuals still remain assigned to appropriate classes based on the original tags.

In the results of the model transformation depicted above, two namespaces are used. A first namespace is implicit, i.e. all resources expressed in this namespace are given their full name, namely "http://plant02.siemens.com/". A second namespace expressed by a shortcut "hto:" includes all ontological data such as sensor, equipment and tags. The shortcut is exemplarily set to "http://project-hto.siemens.com/hto#". Accordingly, the full name "hto:sensor" corresponds to "http://project-hto.siemens.com/hto#sensor".

This convention has the objective of separating the first namespace "http://plant02.siemens.com/" of a particular nature - here: exemplarily dedicated to a specific plant "plant02" - from the second namespace "http://project-hto.siemens.com/hto#" of a general nature. The latter second namespace allows a general usage for all kinds of projects and is particularly not limited to the exemplary "plant02". Additionally, this separation permits a separation of general data models from data stored in the devices.

The model transformation is mainly based on the fact that an OWL (Web Ontology Language) class in the domain model of Fig. 2 corresponds to each tag in the vocabulary of Fig. 2. The mapping between classes and tags is indicated by an annotation property "hto:associatedTo". As an example, the ontology comprises relations like "hto:temp", "hto:associatedTo", "hto:Temperature". In case that a given entity is tagged by "temp", the domain model reflects this tagging by including an individual of type "Temperature".

By a second sub-step, an individual of the ontological model is retrieved being related by a reference-based semantic relation and referencing or creating a references individual in the ontological model. For each reference being related by the reference-based semantic relation "hto:hasRef" - see semantic web representation defined above - the referenced individual is retrieved. For the case that the individual to be referenced does not exist, the individual to be referenced is created and then referenced.

The example below shows the results of the model transformation according to the second sub-step:
<http://plant02.siemens.com/equip07454> a hto:Equip;

For the data point for which a reference to the equipment <http://plant02.siemens.com/equip07454> was defined in the semantic web representation above, a reference to the individual of type "Equip" is retrieved.

By a third sub-step, at least one individual of the ontological model is associated with at least one other individual by a property of the ontological model. The property is thereby determined by the property which is associating the retrieved class of the least one individual and the retrieved class of the at least one other individual. In the semantic web representation above this association is the case for a tag co-occurrence, i.e. where at least one tag is assigned to another tag by the declaration "hto:hasTag".

As to tag co-occurrence, the entity "point01254" is tagged by "sensor", "temp", "discharge". Co-occurrences are (sensor, temp), (sensor, discharge) and (temp, discharge). A co-occurrence between two tags is the relation of the data point with both tags by the declaration "hto:hasTag", e.g.:
point01254 hasTag sensor
point01254 hasTag temp

For each tag co-occurrence, the associated properties between the classes that were retrieved in the first sub-step are retrieved, if such properties exist. The example below shows the results of the model transformation according to the third sub-step:
<http://plant02.siemens.com/point01254> hto:quantifies <http://plant02.siemens.com/temp05488>.
<http://plant02.siemens.com/point01254> hto:locatedOn <http://plant02.siemens.com/discharge06954>.
<http://plant02.siemens.com/equip07454> hto:hasSection <http://plant02.siemens.com/discharge06954>.

The point "point01254" is associated by the temperature measurement "temp05488" with the property - or "predicate" in semantic web terminology - "quantifies", see "hto:quantifies" above. This property is depicted in the block diagram of the resulting graph knowledge according to Fig. 1. This property is determined by the property "quantifies (observes)" according to the Domain Model in Fig. 2 which is associating the retrieved class "Point" of the individual "point01254" and the high-level class "Measurement (Observation)" of the retrieved class "Temperature" for the individual "temp05488".

The third sub-step is based on the assumption that each class in the domain model is connected to another class by at most one property. It means, in terms of OWL, that different properties cannot have the same domain and the same range. In a triple where the property appears, its domain is the type of the first entity while its range is that of the second entity. The Haystack Tagging Ontology according to Fig. 2 allows for inferring a correct relation between individuals by comparing the domain and the range of available properties in the ontology.

Fig. 1, finally, shows a block diagram of graph knowledge generated from the exemplary tagged entity introduced below.

The main benefit of the ontological model relies in the fact that co-occurrences are included in the ontology, along with tags. The proposed ontology follows a novel design pattern where tags are decoupled from the generated graph knowledge but following the same meta-model. It has the benefit that tags can then be turned into graph knowledge and vice-versa. The transformation also leverages description logic reasoning to disambiguate between tags in particular cases. As a result, the proposed ontology combines advantages of both models. Among others, one can use the conciseness of tags to store them directly in a field device while the generated graph knowledge could be leveraged for automatic processing of the data/measurement available on the device. Moreover, the ontology design pattern may be used to semantically enhance any kind of domain model vocabulary - or a set of tags - as long as the latter is exhaustive enough.

The embodiments advantageously allow for modeling entities with low computational power by maintaining two parallel representations of the same semantics, the tag knowledge on the one hand, and on the other hand, the ontological graph knowledge.

The ontological knowledge advantageously allows for a standardized reasoning and search mechanisms as a standard interface to retrieve and search data. SPARQL (SPARQL Protocol and RDF Query Language) is an example for a query language, which further allows retrieving and manipulating data stored in a semantic web or RDF format.

The embodiments advantageously enable automation systems to be semantically described in a standard and machine inter-pretable manner, thereby enabling the advancements in the development, engineering, maintenance and documentation of automation systems.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for semantically representing a system of devices dedicated to automation purposes, the method including the steps of:
- providing a tagging-based data model for representing at least one of said devices by an entity, each entity associated by at least one tag;
- generating a semantic web representation
- by establishing a tag-based semantic relation between at least one entity and at least one tag; and/or;
- by establishing a reference-based semantic relation between at least one entity and at least one other entity;
- integrating said semantic web representation into an ontological model
- by retrieving a class of the ontological model for at least one tag being related by said tag-based semantic relation and assigning or creating an individual in the ontological model;
- by retrieving an individual of the ontological model being related by said reference-based semantic relation and referencing or creating a referenced individual in the ontological model; and;
- by associating at least one individual of the ontological model with at least one other individual by a property of the ontological model based on a property associating the retrieved class of the least one individual and the retrieved class of the at least one other individual.

2. The method of claim 1, wherein the class and/or the individual and/or the property are identified as semantic web resources.

3. The method of claim 1, wherein the class and/or the individual and/or the property are identified by an Internationalized Resource Identifier or by a Uniform Resource Identifier.

4. The method of claim 3, wherein the Internationalized Resource Identifier and/or the Uniform Resource Identifier are composed of a namespace and a local name.

5. The method of claim 1, wherein the devices are building automation components.

6. The method of claim 1, wherein the tagging-based data model is modeled according to Project Haystack.

7. The method of claim 1, wherein the tags are organized in a vocabulary and wherein the tags are associated to individuals instantiated by a class of a domain model, the class being related by said tag-based semantic relation.

8. The method of claim 1, wherein each entity and each tag is expressed by a relation within a meta-model.

9. A computer program product comprising program code stored on a non-transitory computer-readable storage medium, the program code, when executed on a computer, is configured to:
- load a tagging-based data model for representing at least one of said devices by an entity, each entity associated by at least one tag;
- generate a semantic web representation
- by establishing a tag-based semantic relation between at least one entity and at least one tag and/or
- by establishing a reference-based semantic relation between at least one entity and at least one other entity,
- integrate said semantic web representation into an ontological model
- by retrieving a class of the ontological model for at least one tag being related by said tag-based semantic relation and assigning or creating an individual in the ontological model;
- by retrieving an individual of the ontological model being related by said reference-based semantic relation and referencing or creating a referenced individual in the ontological model;
- by associating at least one individual of the ontological model with at least one other individual by a property of the ontological model based on a property associating the retrieved class of the least one individual and the retrieved class of the at least one other individual.
